# EUROPEAN PATENT SPECIFICATION

(11) **EP 2 036 385 B1**
(45) Date of publication and mention of the grant of the patent: **13.06.2012**
(21) Application number: 07788754.5
(22) Date of filing: 20.06.2007
(51) Int. Cl.: H04W 4/00, H04L 29/06, H04L 29/08

(54) **ESTABLISHING A PEER-TO-PEER PACKET SWITCHED CONNECTION**
HERSTELLEN EINER PAKETVERMITTELTEN PEER-TO-PEER-VERBINDUNG
ÉTABLISSEMENT D'UNE CONNEXION À COMMUTATION DE PAQUETS DE POSTE À POSTE

(30) Priority: 22.06.2006 FI 20065442
(43) Date of publication of application: 18.03.2009
(73) Proprietor: TELIASONERA AB, 10663 Stockholm (SE)
(72) Inventor: TUOMELA, Frans, 00640 Helsinki (FI)
(74) Representative: Honkasalo, Terhi Marjut Anneli
(86) International application number: PCT/FI2007/050379
(87) International publication number: WO 2007/147948

(56) References cited:
- EP-A1- 1 650 998
- EP-A1- 1 672 866
- WO-A-2005/086453
- WO-A-2006/010526
- WO-A1-03/003767
- WO-A1-2005/027375
- WO-A1-2005/027481
- WO-A2-99/17579
- US-A1- 2002 090 975
- US-A1- 2004 252 674

## Description

### FIELD OF THE INVENTION

The present invention relates to establishing a peer-to-peer connection, and particularly to establishing a peer-to-peer packet switched connection.

### BACKGROUND OF THE INVENTION

The evolvement of communication technology, particularly IP-based communication technology, and user terminals has enabled versatile communication possibilities. One communication type is a peer-to-peer connection in which a connection is established between two remote units. Establishing a peer-to-peer packet switched connection through the Internet, especially between mobile units having no permanent network address, is rather complicated and difficult, as discussed in US patent 6 219 710, for example. It describes a solution in which a monitor channel is used for transmitting an indication that peer-to-peer packet switched connection establishment is desired, and a network address, or identification information on the other unit with which identification information on a network address may be retrieved, is transmitted between the remote units. One of the disadvantages associated with the above arrangement is that although the network address is resolved, the peer-to-peer packet-switched connection may be established in vain, only to notice that it cannot be used as intended since one of the remote units does not support a required feature, for example.

US 2004/0252674 discloses a solution in which a packet switched connection may be established between two user terminals already having a circuit switched connection. US 2004/0252674 discloses that the packet-switched addresses needed for establishment of the connection may be transmitted to the terminals by means of user-to-user signalling and that the user-to-user signalling may be used also for exchanging session description protocol information during the call set up.

### BRIEF DESCRIPTION OF THE INVENTION

An object of the present invention is thus to provide a method and an apparatus for implementing the method so as to alleviate the above disa d-vantages. The object of the invention is achieved by a method, a system, terminals and a computer program product which are characterized by what is stated in the independent claims. Preferred embodiments of the invention are disclosed in the dependent claims.

The invention is based on the idea of utilizing a user-to-user signalling supplementary service (UUS), below UUS service, to transfer information required for the peer-to-peer packet-switched connection, called below PS connection. The UUS service is originally a circuit switched service that allows a subscriber to send/receive a limited amount of information to/from other subscriber over a signalling channel in association with a call or call set up to the other subscriber so that the subscriber can handle the UUS service independently within the call or call set up. The information is passed transparently (i.e. without modifying the contents) through the network.

An advantage of the invention is that prior to establishing a packet switched connection it can be ensured that the packet switched connection can be used for the purpose it was established and/or used as intended. For example, thanks to the invention, it may be ascertained that a certain application exists in both terminals prior to establishing a packet switched connection for information exchange by the applications.

### BRIEF DESCRIPTION OF THE DRAWINGS

In the following, the invention will be described in greater detail by means of preferred embodiments and with reference to the accompanying drawings, in which
Figure 1 shows a system architecture;
Figure 2 is a block diagram of a terminal;
Figures 3A and 3B illustrate examples of information according to the invention;
Figure 4 illustrates signalling according to an embodiment of the invention; and
Figure 5 illustrates signalling according to another embodiment of the invention.

### DETAILED DESCRIPTION OF SOME EMBODIMENTS

The following embodiments are exemplary. Although the specification may refer to "an", "one", or "some" embodiment(s) in several locations, this does not necessarily mean that each such reference is made to the same embodiment(s), or that the feature only applies to a single embodiment.

The present invention is applicable virtually to any communications system providing packet switched communications and supporting a circuit switched UUS service, and particularly applicable to systems having both a circuit switched (CS) and a packet switched (PS) network. The communications system may be a fixed communications system and/or a wireless communications system or any combination thereof. Communications systems, especially wireless communications systems, develop rapidly. Such development may require extra changes to the invention. Therefore, all words and expressions should be interpreted broadly, and they are intended to illustrate, not to restrict, the invention.

In the following, the present invention is described using a system utilizing a PLMN (Public Land Mobile Network) as a CS network and the Internet as a PS network, as an example of a system to which the present invention may be applied, without restricting the invention thereto. It should be appreciated that the systems, networks, and transmission methods used for transmitting the UUS service are irrelevant to the actual invention. Therefore, they need not be discussed in more detail here.

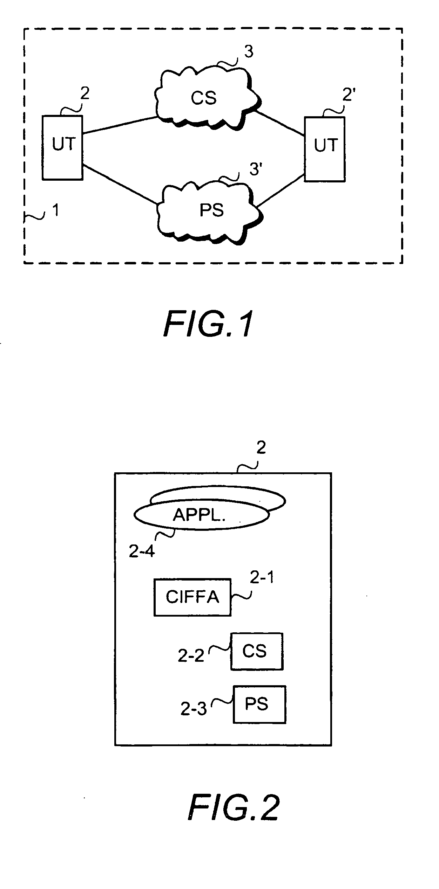

Figure 1 shows a very simplified system architecture only comprising a communications system 1, two terminals 2, 2', a circuit switched network 3,and a packet switched network 3'.

The terminals 2, 2' illustrate different endpoints of a communication, and they can be mobile terminals or fixed terminals or one of them can be a mobile and the other a fixed terminal. The terminal can be a user terminal (UT), such as a personal computer or a mobile phone, and/or it can be terminals used for machine-to-machine connections or user-to-machine connections, such as a server. Different embodiments of the terminal according to the invention are disclosed in more detail below with Figures 2, 4 and 5.

The networks 3, 3' illustrate means for transmitting information between user terminals, and they can be wireless networks or fixed networks. The type and functionality of the networks are irrelevant to the invention and therefore they are not discussed in detail here. For example, the packet switched network may be GPRS (General Packet Radio Service), an ad hoc network, utilize WLAN (Wireless Local Area Network), and/or Bluetooth to provide the packet switched connections. Thus, the packet switched network can even be a direct link which is spontaneously established as an ad hoc network between two terminals.

Figure 2 is a block diagram of a terminal according to an embodiment of the invention. The terminal is preferably a multi-access terminal providing access to both circuit switched services and packet switched services and supporting the UUS service and simultaneous PS and CS connections, such as so called 3^{rd} generation mobile phones, ISDN terminals, ADSL terminals, GPRS class A and class B terminals, terminals with UTRAN capability, terminals with GERAN capability and multi-access terminals with GSM/UMTS and WLAN capabilities.

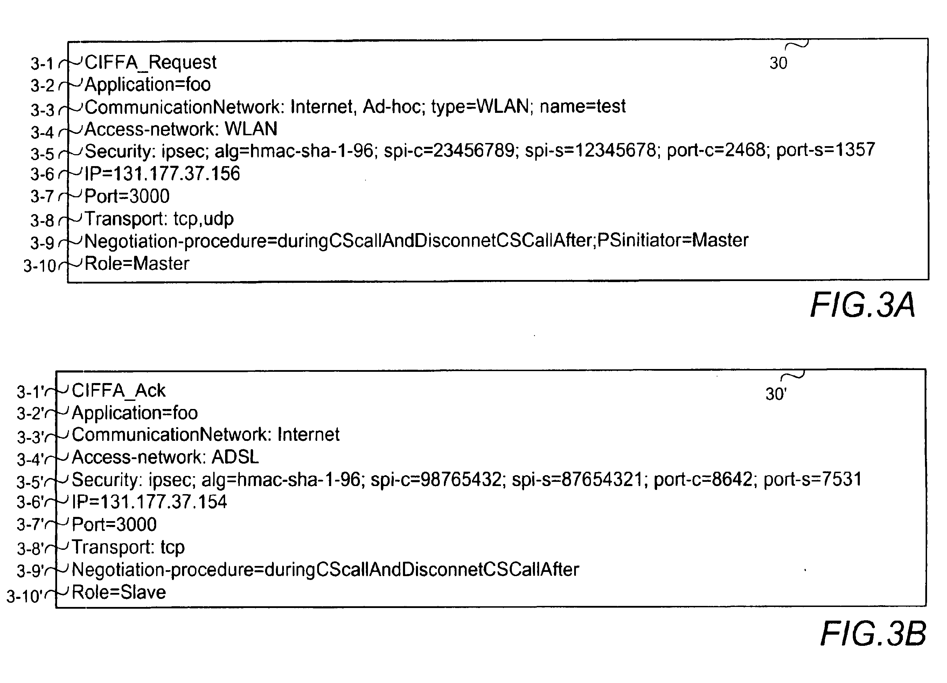

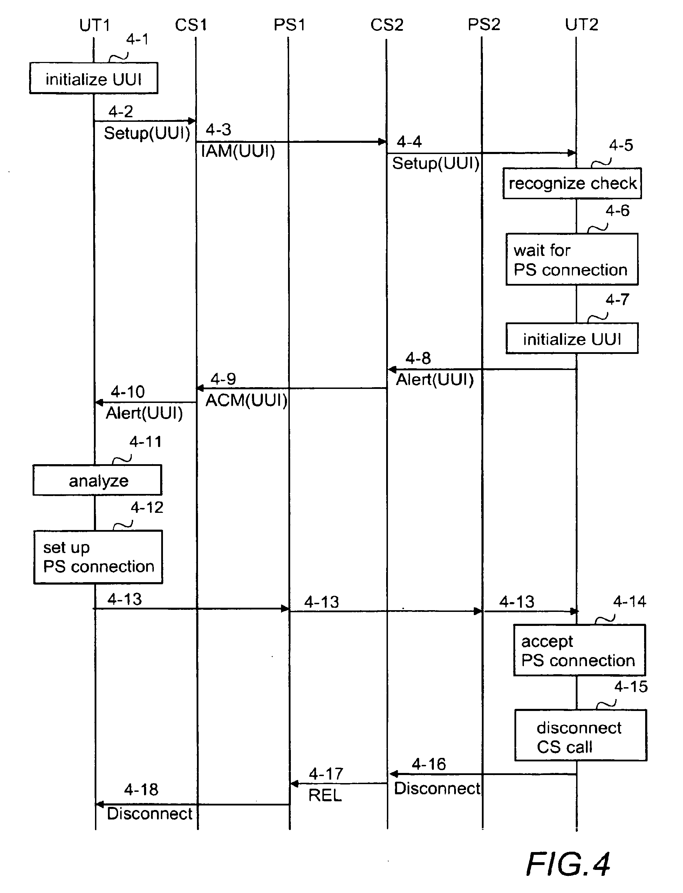

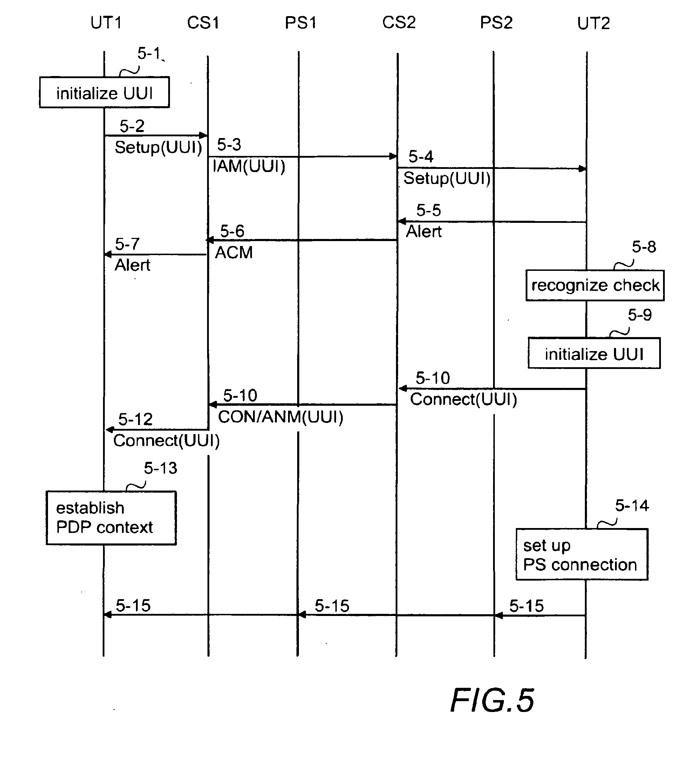

In the embodiment of Figure 2, a terminal 2 contains a CI FFA module 2-1 providing a connection interface function for applications (CIFFA) according to an embodiment of the invention, a CS module 2-2 comprising an interface for the circuit switched network CS, a PS module 2-3 comprising an interface for the packet switched network PS, and one or more applications 2-4. An application 2-4 is a service enabler, i.e. a capability which may be used, either by itself or in conjunction with other service enablers, to provide a service to the user of the terminal. An application may use enablers and connectivity to interact with network applications and services or with corresponding applications. Examples of different applications include games, calendar tools, file sharing, video sharing and whiteboarding. When an application requires a peer-to-peer connection, either by itself or instructed by a user, the terminal according to the invention utilizes CIFFA for establishing the peer-to-peer connection. Thus, CIFFA can also be considered to be an application or enabler and it provides an interface, a so-called application programming interface, for applications, said interface offering function calls to connection establishment, sending or receiving information, and disconnecting of the connection, for example. CIFFA may be implemented so that an application developer needs not to amend the application, or to take CIFFA into account when developing the application, or so that the application developer needs to amend/take into account CIFFA, as is well known to a person skilled in the art. CIFFA initialises user-to-user information (UUI) transferred by the UUS service. Examples of different UUIs are disclosed in Figures 3A and 3B. Further, CIFFA controls CS and PS modules so that information on connections is transferred between the CS and PS modules as will be illustrated below. Examples of different embodiments of the CIFFA are disclosed in more detail below with reference to Figures 4 and 5.

It is apparent to a person skilled in the art that the above-described modules and applications may be embedded in one unit or in separate units in a terminal. The modules are preferably controlled by an operating system of the terminal and connected to each other, or integrated to each other so that one module contains the interfaces, or one unit contains each module. CIFFA, as well as the applications, can be pre-installed or downloaded into a terminal. Furthermore, it is apparent to a person skilled in the art that the terminal also comprises other entities, functions and structures that need not be described in detail herein. Examples of these include processor(s), memory, input/output bus, RF transceivers, user interfaces, etc.

Figures 3A and 3B illustrate UUIs according to an embodiment of the invention; Figure 3A illustrates a UUI of a calling party, called below UUI-orig, and Figure 3B illustrates a UUI of the called party, called below UUI-reply. UUI-reply is a response to UUI-orig, and they utilize "offer-answer" type of negotiation mechanism without restricting the invention thereto. In other words, with offer, i.e. UUI-orig, certain features are either offered by giving alternatives or requested, and with an answer, i.e. UUI-reply, information on selected features and supported required features is transmitted to the other party.

In the example shown in Figures 3A and 3B, the UUS service is a UUS service 1 in which the UUS service may be invoked with a call set up and the call may be terminated before a PS connection is established and in which UUI can be transferred with call originating signalling. In other words, when the UUS service 1 has been activated, a calling terminal and a called terminal, i.e. a calling party and a called party, respectively, can include UUI when accepting, rejecting, or terminating a call. UUI is information transferred by using the UUS service. UUS service for mobile terminals is currently being developed by 3GPP (3rd Generation Partnership Project), and specifications for the UUS service 1, now numbered as TS 22.087, can be found at http://www.3gpp.org/ftp/Specs/html-info/22087.htm if detailed information is required. For the UUS in fixed terminals, an ITU-T (International Telecommunication Union) specification Q.932 can be found at http://www.itu.int/ITU-T/asn1/database/itu-t/q/ if a detailed information is required. An advantage of using the UUS service 1 is that it is possible to establish a PS connection without answering to a CS call which started the establishment of the PS connection. For the sake of clarity, UUIs in Figures 3A and 3B are in plain text format, although it is apparent to one skilled in the art that the information, or some of it, may be coded, packed or compressed.

UUI-orig 30 in Figure 3A comprises a CIFFA parameter 3-1 indicating that this UUS service 1 is for establishing a PS connection. The parameter 3-1 preferably indicates, in addition to CIFFA, the nature of the UUI. For example, in the illustrated example, the parameter 3-1 indicates that this is a request. It is apparent to one skilled in the art that the parameter indicating that the UUI is for a PS connection may have a different name and that the indication may be given as a parameter value.

A second parameter in UUI-orig 30 is a parameter 3-2 defining the application which is required in the called terminal, i.e. it defines the application for which the PS connection is intended. In the example of Figure 3A the application which is required in the called terminal is foo.

Other parameters in Figure 3A relate to PS connection-related information which may include any kind of information. Examples of the PS connection-related information include a preferred access network for the PS connection, a preferred security mechanism with related parameters, information indicating in which phase of the CS call the PS connection is established and how the CS call is treated, and information indicating the role of the calling terminal. Yet further examples of the further information include alternative communications network(s) with connection parameters and alternative security mechanism(s). In the example of Figure 3A, UUI offers (parameter 3-3) two alternative communication networks: the Internet and an ad hoc network to which the type and name are given. UUI in Fig. 3A also indicates (parameter 3-4) the access network the calling party is to use and the required security mechanism (parameter 3-5) with parameter values to be used with the security mechanism. In addition, the illustrated UUI comprises the calling party's IP address (parameter 3-6) and port (parameter 3-7) used by the calling party for listening and transmitting, and alternatives for the transport layer protocol to be used (parameter 3-8). Further, in the example of Figure 3A, UUI-orig 30 comprises a negotiation-procedure parameter 3-9, which value indicates that the PS connection is to be established during a CS call set up phase and the CS call set up is to be disconnected after the PS connection is established, and that it is the master of the connection that initiates the establishment of the PS connection; and a role parameter (3-10), which value indicates that the calling terminal is going to be the master for the PS connection.

As can be seen from the above, quite a lot of PS connection-related information can be transferred and used in negotiations before the PS connection is established. However, it suffices for an UUI according to the invention that it indicates, either directly or indirectly, that it is for a PS connection, and that it contains at least one condition which needs to be fulfilled in order for the PS connection to be established. Preferably the condition is that the called terminal contains or supports the required application, i.e. the value of the parameter 3-2, or one of the values of the parameter, but instead of this or in addition to these another condition or other conditions, such as use of the suggested security mechanism, can be used. Depending on the implementation, the terminals may be configured to use a value or values of a certain parameter or certain parameters, such as 3-2, as a condition, or they may be configured to use parameters with one value as conditions, or each parameter as a condition.

UUI-reply 30' in Figure 3B illustrates a response to UUI-orig in Figure 3A. UUI-reply 30' in Figure 3B comprises a CIFFA parameter 3-1' indicating that this is a reply to a request to establish a packet switched connection, parameter 3-2' confirming that the terminal contains the required application, and, as other PS connection-related information, the selected communication network (parameter 3-3'), an access network (parameter (3-4') used by the called party for the PS connection; confirmation (parameter 3-5') that the required security mechanism is supported with required values; an IP address (parameter 3-6') to be used with the PS connection for reaching the called party; port (parameter 3-7) used by the called party for listening and transmitting; the selected transport layer protocol (parameter 3-8'); a negotiation-procedure parameter 3-9' which confirms that the suggested negotiation procedure is accepted; and a role parameter (3-10') which indicates that the called terminal is going to be a slave to the PS connection.

By giving the IP addresses in UUI-orig and UUI-reply, problems relating to solving out an IP address of a calling or called roaming subscriber, for example, are solved. Furthermore, since the address information is transmitted in UUI, the information reaches the called one even with an international call with a calling line identification restriction and/or change of original calling number, and call forwarding. A further advantage is that since the given IP address is a reliable identifier, the invention is also usable in machine-to-machine PS connections.

UUI-orig and UUI-reply may also be used for selecting an application or applications which can be used on the PS connection. This can be performed by giving to the parameter 3-2 a value which comprises more than one application, in which case the condition may be that at least one of the applications must be supported by the called one. Correspondingly, the value of the parameter 3-2' may comprise more than one application, the value being preferably a subset of the value of the parameter 3-2 if the calling party is the master. However, the value of the parameter 3-2' may comprise more applications than the value of the parameter 3-2 even if the calling party is the master.

Although not shown in Figures 3A and 3B, UUI may also contain other information, such as information on how to establish an IP ad hoc network, i.e. ad hoc network type, name/identifier and authentication parameters. It is also apparent to one skilled in the art that some parameters having a single value in the illustrated examples may have more than one value as alternatives.

Depending on the implementation, a parameter having no alternatives in the offer may be considered to be a condition which needs to be fulfilled, or the terminals may be configured to use a value or values of a certain parameter, or certain parameters to be the condition, for example.

Figure 4 illustrates signalling according to an embodiment of the invention. In the example shown in Figure 4, it is assumed, for the sake of clarity, that the condition relating to establishing the PS connection is fulfilled, other requirements are met and the PS connection is established. A further assumption made here is that no circuit switched call is established, i.e. the UUS service 1 is used and that the condition is to have the same application in both terminals. Furthermore, it is assumed that the transferred UUIs are the ones illustrated in Figures 3A and 3B.

Figure 4 starts at the point in which the calling party, for example a user of a user terminal UT1, opens an application and requests a peer-to-peer connection to user B. Therefore UT1, or more precisely CIFFA in UT1, in point 4-1, initializes UUI, which is in the example UUI-orig illustrated in Figure 3A. Then UT1 sends a circuit switched call set up message 4-2 with UUI to a circuit switched network CS1 serving UT1. CS1 forwards UUI to a circuit switched network CS2 serving a called party's terminal UT2 in an initial address message IAM 4-3. CS2 forwards UUI in a call set up message 4-4 to UT2.

UT2, or more precisely, CIFFA in UT2, recognizes, in point 4-5, that UUI is for a PS connection and the calling party supports CIFFA application, and analyses, in point 4-5, the content of the received UUI. More precisely, in the illustrated example, CIFFA in UT2 checks whether or not the condition (in this example support for application foo) is fulfilled, checks other parameters/conditions and performs required selections, such as selecting the preferred connection network and transport layer. Since in the example illustrated in Figure 4, UT2 has the application indicated in UUI, i.e. the condition is fulfilled, as well as other conditions/parameters are fulfilled and/or accepted and required selections made, and UUI in message 4-4 indicated that UT1 is the master for the PS connection, UT2 starts, in point 4-6, to wait for a PS connection request from UT1. In other words, CIFFA in UT2 instructs, in point 4-6, a PS module in UT2 to wait a PS connection request from UT1. UT2, or more precisely CIFFA in UT2, also responds to the set up message in point 4-7 where it initializes UUI for the response, UUI being UUI-reply illustrated in Figure 3B, and sends an alert message 4-8 with UUI to CS2, which forwards UUI in an address complete (ACM) message to CS1, wherefrom UUI is sent to UT1 with an alert message 4-9.

In response to receiving the alert message 4-10, UT1 analyzes, in point 4-11, the received UUI to find out whether or not the requested PS connection can be established, i.e. whether or not the condition was fulfilled. It may also analyze whether or not further negotiation on PS connection features is required. However, in this example no further negotiations are required. More precisely, in the example, CIFFA in UT1 recognizes that the condition is fulfilled, as well as that other parameters are supported since UUI was in an alert message, and therefore CIFFA searches the received UUI for the selected connection network and relating address information (IP address and port number), the selected transport protocol and security mechanism values. Since the condition was fulfilled, the terminal, or more precisely, CIFFA in UT1, instructs, using the searched information, the PS module to start, in point 4-12, to set up the PS connection by sending via packet switched networks PS1 and PS2 a connection request 4-13 to UT2, using the searched information. The PS connection may be connectionless or connection-oriented, and the details of establishment bear no significance to the invention, and are therefore not described in detail here.

In response to receiving the message 4-13, UT2 notices that a PS connection request from UT1 is received and accepts it in point 4-14. Now a packet-switched connection is established and can be used for control traffic of the application and for user data. Since security mechanism information, such as IPsec keys, was exchanged before the actual establishment of the PS connection, the PS connection is a secured connection from the very beginning.

In addition, UT2 disconnects in point 4-15 the CS call without answering to the call, as was instructed by UUI in the message 4-4. UT2 disconnects the CS call by sending a disconnect message 4-16 to CS2 which sends a release message 4-17 to CS1, which then sends a disconnect message 4-18 to UT1, thereby notifying the UT1 that no CS call was established.

In an embodiment of the invention, UT2 is arranged to send after the alert message 4-8, a PS connection request to UT1 (i.e. message 4-13 is sent from UT2 to UT1), and when UT2 receives from UT1 an indication that the PS connection was successfully established, it continues from point 4-15 by disconnecting the call. Based on the information received in UUI in the alert message, UT1 knows the selected connection network, IP address and port number in UT2, thus knowing wherefrom to wait for the PS connection request.

In an embodiment of the invention, UT2 is arranged to send instead of the alert message 4-8, a PS connection request to UT1 (i.e. message 4-13 is sent from UT2 to UT1), and when UT2 receives from UT1 an indication that the PS connection was successfully established, it continues from point 4-15 by disconnecting the call.

As can be seen from the above, the PS connection was established without establishing a CS connection. However, it is obvious to one skilled in the art that the negotiation mechanism may be that PS connection is established after a CS connect message, i.e. after a CS connection has been established. Figure 5 illustrates such an embodiment.

In the example shown in Figure 5, it is assumed, for the sake of clarity, that the condition relating to establishing the PS connection is fulfilled, other requirements are met and the PS connection is established. A further assumption made here is that the UUS service 1 is used and that the condition is to have the same application in both terminals. Furthermore, it is assumed that the transferred UUIs both contain only a CIFFA attribute indicating that they are for establishing a PS connection, an IP address, a port number, and the application, i.e. the condition. However, UUIs may comprise one or more other parameters. A further assumption in the embodiment is that when UUI sent by the calling party contains no indication that the calling party is the master, or the one requesting establishment of the PS connection, the called party is to act as a master, or at least request the establishment.

Figure 5 starts at the point in which a calling party, such as the user of a terminal UT1, opens an application and requests a peer-to-peer connection to user B. Therefore UT1, or more precisely CIFFA in UT1, initializes in point 5-1 UUI which, as stated above, comprises parameters 3-1, 3-2, 3-3, 3-6 and 3-7 with their values as shown in the exemplary UUI-orig illustrated in Figure 3A, except that the Internet is given as the only possible communication network. Then UT1 sends a circuit switched call set up message 5-2 with UUI to a circuit switched network CS1 serving UT1. CS1 forwards UUI to a circuit switched network CS2 serving a called party's terminal UT2 in an initial address message IAM 5-3. CS2 forwards UUI in a call set up message 5-4 to UT2.

In the embodiment illustrated in Figure 5, UT2 responds to the set up message by sending an alert message 5-5 to CS2 which forwards an address complete (ACM) message 5-6 to CS1 wherefrom an alert message 5-7 is sent to UT1. Then UT1 remains waiting for a message from UT2.

Meanwhile UT2, or more precisely, CIFFA in UT2, recognizes in point 5-8 that the set up message 5-4 contained UUI for a PS connection, and checks in point 5-8, whether or not the condition is fulfilled. Since in the example illustrated in Figure 5, UT2 has the application indicated in UUI, i.e. the condition is fulfilled, the Internet can be used as the connection network, and while UUI in message 5-4 contained no additional conditions, requirements or required no selections, UT2 initializes in point 5-9 UUI for the response which, as stated above, comprises parameters 3-1', 3-2', 3-3', 3-6' and 3-7' with their values as shown in the exemplary UUI-reply illustrated in Figure 3B. Then UT2 sends UUI in a connect message 5-10 to CS2 which forwards UUI in a connect/answer (CON/ANM) message 5-11 to CS1. CS1 forwards UUI in a connect message 5-12 to UT1. In response to the connect message 5-12, UT1 establishes, in point 5-13, a PDP context in order to be ready to receive a PS connection request. Because of a connect-answer message, a CS call has also been established between UT1 and UT2.

UT2 may also analyse in point 5-8 whether or not further negotiation on PS connection features is required. However, in this example no further negotiations are required, and UT2, or more precisely, CIFFA in UT2, instructs, using the information received in the message 4-4, the PS module to start, in point 5-14, to set up the PS connection by sending via packet switched networks PS1 and PS2 a TCP connection request 5-15 to UT1. The PS connection may be connectionless or connection-oriented, and the details of establishment bear no significance to the invention and are therefore not described in detail here.

In response to receiving the message 5-14, UT1 notices that a PS connection request from UT2 is received and accepts it in point 5-15. Now a packet-switched connection is established and can be used for control traffic of the application and for user data.

The CS call may be released at any time, even immediately after it has been established.

Although not shown in Figures 4 and 5, the call set up phase may be maintained for a longer period to negotiate PS connection features or to test IP connectivity or corresponding capabilities, for example. The features may be suggested by a slave and decided by a master. For example, the called party may indicate that the suggested phase in which the PS connection should be established and/or how to handle the PS call are not appropriate for the called terminal. UT1 and UT2 may also negotiate which one is to start the establishment of the PS connection.

Although not explicitly shown above, the present invention has an advantage over 3GPP CSI (CAMEL subscription information): the present invention does not restrict the use of other CS supplementary services, i.e. it can be used with different call forwarding services, such as CFU (unconditional call forwarding), CFB (call forwarding on mobile subscriber busy) and CFNR (call forwarding on no reply), and with "number restriction" services, such as CLIR (calling line identification restriction) and COLR (connected line identification restriction), for example.

In another embodiment of the invention, UT2 sends a disconnect message with UUI, instead of the connect message 5-10. In the embodiment, the PS connection between the UT1 and UT2 is established after the disconnected CS call establishment.

Although not shown above, if the condition is not met in UT2, UT2 preferably sends a disconnect message with UUI having "CIFFA_ERROR" as CIFFA-parameter 3-1", and the reason(s) why the PS connection cannot be established.

Normally, as in the examples in Figures 4 and 5, the network is not to interpret or act upon UUI, and the invention requires no changes to existing networks. However, in one embodiment of the invention, a switching centre in a CS network may be arranged to detect that the call set up signalling contains UUI relating to an establishment of a PS connection, and in response to the detection, not to allocate a traffic circuit for the call but to use a so-called zero traffic circuit for the call set up.

In another embodiment of the invention, a switching centre, or any other network node via which call set up signalling passes, in a CS network may be arranged to detect that the call set up signalling contains UUI relating to an establishment of a PS connection, and in response to the detection, not to pass the call set up signalling. In other words, in response to UUI comprising the CIFFA parameter, UUI is filtered/blocked, i.e. not sent, but UUIs without CIFFA parameter are forwarded, unless the network node is arranged to filter UUIs with some other parameter. An advantage of this embodiment is that an operator may prevent non-chargeable use of the CS network.

The steps, points, messages and related functions described above in Figures 4 and 5 are in no absolute chronological order, and some of the points may be performed and/or some of the messages may be sent simultaneously or in an order different from the one given here. Other functions can also be executed between the points or within the points. Some of the points or part of the points can also be omitted. Other messages can be transmitted and/or other points can also be carried out between the illustrated ones. The messages are only examples and may also comprise other information. Furthermore, the messages may be different from the above-mentioned messages. For example, some other protocols, such as SIP (session initiation protocol), may be used for transferring UUIs.

Although the invention has been described above using a UUS service 1, it is obvious to one skilled in the art that the invention can be implemented with a UUS service 2 and a UUS service 3 as well. With the UUS service 2, UUI can be sent and received after the calling subscriber has received an indication that the remote party is being informed of the call and prior to the establishment of the connection. In the UUS service 2, UUI sent by the calling subscriber prior to receiving the acceptance of the call by the remote party, may as a network option be delivered to the remote party after the call has been established. In the UUS service 3, UUI can be sent and received only while the connection is established.

The terminals implementing the functionality of the present invention comprise not only prior art means but also means for establishing a PS connection utilizing UUS. More precisely, they comprise means for implementing an embodiment according to the present invention. Present terminals comprise processors and memory that can be utilized in the functions according to the invention. All modifications and configurations required for implementing the invention may be performed as routines which may be implemented as added or updated software routines, application circuits (ASIC) and/or programmable circuits. Generally, program products include routines, programs, modules, objects, components, segments, schemas, data structures, etc. which perform particular tasks or implement particular abstract data types and which can be stored in any computer-readable data storage medium and which may be downloaded into a terminal.

It will be obvious to a person skilled in the art that as technology advances, the inventive concept can be implemented in various ways. The invention and its embodiments are not limited to the examples described above.

## Claims

1. A method of establishing a peer-to-peer packet switched connection, the method comprising:
supporting the peer-to-peer packet switched connection by both peers:
**characterized by**
transferring, by using a circuit switched user-to-user signalling supplementary service, before the peer-to-peer packet switched connection is established at least one condition indicating one or more applications that will use the peer-to-peer packet switched connection after the packet switched connection has been established, the condition being fulfilled if at least one of the indicated one or more applications is supported by both peers;
checking before the peer-to-peer packet switched connection is established whether or not the condition is fulfilled; the checking comprising sending, by using the circuit switched user-to-user signalling supplementary service, a response indicating the outcome of the checking of the fulfilment of the condition;
receiving the response; and
establishing the peer-to-peer packet switched connection if the condition is fulfilled.

2. A method as claimed in claim 1, the method comprising transferring using the user-to-user signalling supplementary service, in addition to the at least one condition, a communication network type, and/or address information in a communication network, and/or security mechanism, values relating to a security mechanism, and/or a transport layer protocol, and/or information on a peer's role in the peer-to-peer packet switched connection.

3. A method as claimed in claim 1 or 2, wherein said transferring using the user-to-user signalling supplementary service further includes transferring information on establishment of the peer-to-peer packet switched connection, said information indicating at least when the peer-to-peer packet switched connection is to be established or which one of the peers is to establish the peer-to-peer packet switched connection.

4. A method as claimed in any of the preceding claims, wherein the user-to-user signalling supplementary service is a user-to-user signalling supplementary service 1 in which user-to-user information can be sent and received during origination of a call.

5. A method as claimed in any of the preceding claims, wherein the peer-to-peer packet switched connection is established after a circuit switched call is established.

6. A method as claimed in claim 4, wherein the peer-to-peer packet switched connection is established during a circuit switched call set up phase and no circuit switched call is established.

7. A terminal comprising
a circuit switched interface for circuit switched connections;
a packet switched interface for packet switched connections;
one or more applications; and
a connection interface for receiving a request to establish a peer-to-peer connection from an application;
**characterized in that** the connection interface is configured, in response to the request, to trigger establishment of a peer-to-peer packet switched connection by sending, before the peer-to-peer packet switched connection is established, at least one condition indicating, amongst the one or more applications the terminal comprises, one or more applications that will use the peer-to-peer packet switched connection after the packet switched connection has been established, using a circuit switched user-to-user signalling supplementary service, the condition being fulfilled if the other peer supports at least one of the indicated one or more applications; and by receiving, before the peer-to-peer packet switched connection is established, a response to the request using the circuit switched user-to-user signalling supplementary service, said response indicating the outcome of a checking of the fulfilment of the condition.

8. A terminal as claimed in claim 7, wherein the connection interface is further configured, in response to receiving in the response an indication that the condition is fulfilled, to control the circuit switched interface and the packet switched interface so that information on the peer-to-peer packet switched connection is transferred between the circuit switched interface and the packet switched interface.

9. A terminal, comprising
a circuit switched interface for circuit switched connections; and
a packet switched interface for packet switched connections;
**characterized in that** the terminal further comprises a connection interface for receiving, in a user-to-user information of a circuit switched user-to-user signalling supplementary service, a request to establish a peer-to-peer packet switched connection, said user-to-user information comprising at least one condition indicating one or more applications that will use the peer-to-peer packet switched connection after the packet switched connection has been established; for checking, in response to the request and before the peer-to-peer packet switched connection is established, whether or not the condition is fulfilled, the condition being fulfilled if the terminal supports at least one of the indicated one or more applications, and for sending a response to the request using the circuit switched user-to-user signalling supplementary service, said response indicating the outcome of the checking.

10. A terminal as claimed in claim 9, wherein the connection interface is further configured, in response the condition being fulfilled, to control the circuit switched interface and the packet switched interface so that information on the peer-to-peer packet switched connection is transferred between the circuit switched interface and the packet switched interface.

11. A terminal as claimed in claim 7, 8, 9, or 10, wherein the terminal is arranged to, in response the condition being fulfilled, establish the peer-to-peer packet switched connection without establishing a circuit switched connection.

12. A communication system, comprising at least
a circuit switched network;
a packet switched network; and
two or more terminals, both providing access to the circuit switched network and to the packet switched network, and supporting a peer-to-peer packet switched connection and a user-to-user signalling supplementary service;
**characterized in that**
the terminals are arranged to exchange information relating to the peer-to-peer packet switched connection before establishing the peer-to-peer packet switched connection by using a circuit switched user-to-user signalling supplementary service, said information comprising information relating to at least one condition indicating one or more applications that will use the peer-to-peer packet switched connection after the packet switched connection has been established, the condition being fulfilled if at least one of the indicated one or more applications is supported by both terminals, said information exchange, by using the circuit switched user-to-user signalling supplementary service, comprising sending the condition from a first terminal to a second terminal and sending a response indicating an outcome of a checking of the fulfilment of the condition from the second terminal to the first terminal.

13. A communication system as claimed in claim 12, wherein
the terminals are arranged, in response to the condition being fulfilled, to establish the peer-to-peer packet switched connection without establishing a circuit switched call and to exchange the information during a circuit switched call set up phase; and
the circuit switched network is arranged to detect that the user-to-user signalling service is for a peer-to-peer packet switched connection, and, in response to the detection, not to allocate a traffic circuit for the call but to use a so-called zero traffic circuit for the call set up.

14. A communication system as claimed in claim 12 or 13, wherein the circuit switched network is arranged to detect that the user-to-user signalling service is for a peer-to-peer packet switched connection, and, in response to the detection, to block the information exchange.

15. A communication system as claimed in claim 12, 13, or 14, wherein the terminals are arranged to include in said information address information or security mechanism related information to be used the with peer-to-peer packet switched connection.

## Patentansprüche

1. Verfahren zum Herstellen einer paketvermittelten Peer-to-Peer-Verbindung, wobei das Verfahren Folgendes umfasst:
Unterstützen der paketvermittelten Peer-to-Peer-Verbindung durch beide Peers:
**gekennzeichnet durch**:
Übertragen, unter Verwendung eines leitungsvermittelten User-to-User-Zeichengabe-Zusatzdienstes, bevor die paketvermittelte Peer-to-Peer-Verbindung hergestellt ist, mindestens einer Bedingung, die eine oder mehrere Anwendungen anzeigt, die die paketvermittelte Peer-to-Peer-Verbindung verwenden, nachdem die paketvermittelte Peer-to-Peer-Verbindung hergestellt wurde, wobei die Bedingung erfüllt ist, wenn mindestens eine der angezeigten einen oder mehreren Anwendungen durch beide Peers unterstützt wird;
Überprüfen, bevor die paketvermittelte Peer-to-Peer-Verbindung hergestellt ist, ob die Bedingung erfüllt ist oder nicht, wobei das Überprüfen umfasst, unter Verwendung des leitungsvermittelten User-to-User-Zeichengabe-Zusatzdienstes, eine Antwort zu senden, wobei die Antwort ein Ergebnis der Überprüfung der Erfüllung der Bedingung anzeigt;
Empfangen der Antwort; und
Herstellen der paketvermittelten Peer-to-Peer-Verbindung, wenn die Bedingung erfüllt ist.

2. Verfahren nach Anspruch 1, wobei das Verfahren umfasst, unter Verwendung des leitungsvermittelten User-to-User-Zeichengabe-Zusatzdienstes, zusätzlich zu der mindestens einen Bedingung, einen Kommunikationsnetzwerktyp und/oder Adressinformationen in einem Kommunikationsnetzwerk und/oder einen Sicherheitsmechanismus, Werte bezüglich eines Sicherheitsmechanismus, und/oder ein Transportschichtprotokoll und/oder Informationen über die Rolle eines Peers in der paketvermittelten Peer-to-Peer-Verbindung zu übertragen.

3. Verfahren nach Anspruch 1 oder 2, wobei das Übertragen unter Verwendung des User-to-User-Zeichengabe-Zusatzdienstes des Weiteren enthält, Informationen über die Herstellung der paketvermittelten Peer-to-Peer-Verbindung zu übertragen, wobei die Informationen mindestens anzeigen, wann die paketvermittelte Peer-to-Peer-Verbindung herzustellen ist oder welcher der Peers die paketvermittelte Peer-to-Peer-Verbindung herstellen soll.

4. Verfahren nach einem der vorangehenden Ansprüche, wobei der User-to-User-Zeichengabe-Zusatzdienst ein User-to-User-Zeichengabe-Zusatzdienst 1 ist, bei dem User-to-User-Informationen während der Originierung eines Anrufs versendet und empfangen werden können.

5. Verfahren nach einem der vorangehenden Ansprüche, wobei die paketvermittelte Peer-to-Peer-Verbindung hergestellt wird, nachdem ein leitungsvermittelter Anruf hergestellt wurde.

6. Verfahren nach Anspruch 4, wobei die paketvermittelte Peer-to-Peer-Verbindung während der Aufbauphase eines leitungsvermittelten Anrufs hergestellt wird und kein leitungsvermittelter Anruf hergestellt wird.

7. Endgerät, das Folgendes umfasst:
eine leitungsvermittelte Schnittstelle für leitungsvermittelte Verbindungen;
eine paketvermittelte Schnittstelle für paketvermittelte Verbindungen;
eine oder mehrere Anwendungen; und
eine Verbindungsschnittstelle zum Empfangen einer Anfrage zur Herstellung einer Peer-to-Peer-Verbindung von einer Anwendung;
**dadurch gekennzeichnet, dass** die Verbindungsschnittstelle dafür konfiguriert ist, in Antwort auf die Anfrage die Herstellung einer paketvermittelten Peer-to-Peer-Verbindung auszulösen, indem sie unter Verwendung eines leitungsvermittelten User-to-User-Zeichengabe-Zusatzdienstes vor der Herstellung der paketvermittelten Peer-to-Peer-Verbindung mindestens eine Bedingung sendet, die unter der einen oder den mehreren Anwendungen, die das Endgerät umfasst, eine oder mehrere Anwendungen anzeigt, die die paketvermittelte Peer-to-Peer-Verbindung verwenden werden, nachdem die paketvermittelte Verbindung hergestellt wurde, wobei die Bedingung erfüllt ist, wenn der andere Peer mindestens eine der angezeigten einen oder mehreren Anwendungen unterstützt; und indem sie vor der Herstellung der paketvermittelten Peer-to-Peer-Verbindung eine Antwort auf die Anfrage unter Verwendung des leitungsvermittelten User-to-User-Zeichengabe-Zusatzdienstes empfängt, wobei die Antwort ein Ergebnis eines Überprüfens der Erfüllung der Bedingung anzeigt.

8. Endgerät nach Anspruch 7, wobei die Verbindungsschnittstelle dafür konfiguriert ist, in Antwort auf das Empfangen einer Anzeige in der Antwort, dass die Bedingung erfüllt ist, die leitungsvermittelte Schnittstelle und die paketvermittelte Schnittstelle so zu steuern, dass Informationen über die paketvermittelte Peer-to-Peer-Verbindung zwischen der leitungsvermittelten Schnittstelle und der paketvermittelten Schnittstelle übertragen werden.

9. Endgerät, das Folgendes umfasst:
eine leitungsvermittelte Schnittstelle für leitungsvermittelte Verbindungen; und
eine paketvermittelte Schnittstelle für paketvermittelte Verbindungen;
**dadurch gekennzeichnet, dass** das Endgerät des Weiteren eine Verbindungsschnittstelle umfasst, um in einer User-to-User-Information eines leitungsvermittelten User-to-User-Zeichengabe-Zusatzdienstes eine Anfrage zu empfangen, eine paketvermittelte Peer-to-Peer-Verbindung herzustellen, wobei die User-to-User-Information mindestens eine Bedingung enthält, die eine oder mehrere Anwendungen anzeigt, welche die paketvermittelte Peer-to-Peer-Verbindung verwenden werden, nachdem die paketvermittelte Verbindung hergestellt wurde; um in Antwort auf die Anfrage, und bevor die paketvermittelte Peer-to-Peer-Verbindung hergestellt wird, zu überprüfen, ob die Bedingung erfüllt ist oder nicht, wobei die Bedingung erfüllt ist, wenn das Endgerät mindestens eine der angezeigten einen oder mehreren Anwendungen unterstützt; und um unter Verwendung des leitungsvermittelten User-to-User-Zeichengabe-Zusatzdienstes eine Antwort auf die Anfrage zu senden, wobei die Antwort das Ergebnis der Überprüfung anzeigt.

10. Endgerät nach Anspruch 9, wobei die Verbindungsschnittstelle des Weiteren dafür konfiguriert ist, in Antwort darauf, dass die Bedingung erfüllt ist, die leitungsvermittelte Schnittstelle und die paketvermittelte Schnittstelle so zu steuern, dass Informationen über die paketvermittelte Peer-to-Peer-Verbindung zwischen der leitungsvermittelten Schnittstelle und der paketvermittelten Schnittstelle übertragen werden.

11. Endgerät nach Anspruch 7, 8, 9 oder 10, wobei das Endgerät dafür ausgelegt ist, in Antwort darauf, dass die Bedingung erfüllt ist, die paketvermittelte Peer-to-Peer-Verbindung herzustellen, ohne eine leitungsvermittelte Verbindung herzustellen.

12. Kommunikationssystem, das mindestens Folgendes umfasst:
ein leitungsvermitteltes Netz;
ein paketvermitteltes Netz; und
zwei oder mehr Endgeräte, die beide Zugang zu dem leitungsvermittelten Netz und zu dem paketvermittelten Netz gewähren und eine paketvermittelte Peer-to-Peer-Verbindung und einen User-to-User-Zeichengabe-Zusatzdienst unterstützen;
**dadurch gekennzeichnet, dass**
die Endgeräte dafür ausgelegt sind, unter Verwendung des leitungsvermittelten User-to-User-Zeichengabe-Zusatzdienstes Informationen bezüglich der paketvermittelten Peer-to-Peer-Verbindung vor der Herstellung der paketvermittelten Peer-to-Peer-Verbindung auszutauschen, wobei die Informationen Informationen über mindestens eine Bedingung umfassen, die eine oder mehrere Anwendungen anzeigt, welche die paketvermittelte Peer-to-Peer-Verbindung verwenden werden, nachdem die paketvermittelte Peer-to-Peer-Verbindung hergestellt wurde, wobei die Bedingung erfüllt ist, wenn mindestens eine der angezeigten einen oder mehreren Anwendungen durch beide Endgeräte unterstützt wird, wobei der unter Verwendung des leitungsvermittelten User-to-User-Zeichengabe-Zusatzdienstes stattfindende Informationsaustausch umfasst, die Bedingung von einem ersten Endgerät zu einem zweiten Endgerät zu senden und eine Antwort, die ein Ergebnis eines Überprüfens der Erfüllung der Bedingung anzeigt, von dem zweiten Endgerät zu dem ersten Endgerät zu senden.

13. Kommunikationssystem nach Anspruch 12, wobei
die Endgeräte dafür ausgelegt sind, in Antwort darauf, dass die Bedingung erfüllt ist, die paketvermittelte Peer-to-Peer-Verbindung herzustellen, ohne einen leitungsvermittelten Anruf herzustellen, und die Informationen während einer Aufbauphase eines leitungsvermittelten Anrufes auszutauschen; und
das leitungsvermittelte Netz dafür ausgelegt ist zu detektieren, dass der User-to-User-Zeichengabedienst für eine paketvermittelte Peer-to-Peer-Verbindung gedacht ist, und, in Antwort auf das Detektieren, keine Datenverkehrsleitung für den Anruf zuzuweisen, sondern eine sogenannte Nulldatenverkehrsleitung für den Rufaufbau zu verwenden.

14. Kommunikationssystem nach Anspruch 12 oder 13, wobei das leitungsvermittelte Netz dafür ausgelegt ist zu detektieren, dass der User-to-User-Zeichengabedienst für eine paketvermittelte Peer-to-Peer-Verbindung gedacht ist, und, in Antwort auf das Detektieren, den Informationsaustausch zu blockieren.

15. Kommunikationssystem nach Anspruch 12, 13 oder 14, wobei die Endgeräte dafür ausgelegt sind, in die Informationsadresse Informationen oder sicherheitsmechanismusbezogene Informationen aufzunehmen, die mit der paketvermittelten Peer-to-Peer-Verbindung zu verwenden sind.

## Revendications

1. Procédé d'établissement d'une connexion à commutation de paquets de poste à poste, le procédé comportant :
la prise en charge de la connexion à commutation de paquets de poste à poste par les deux postes ;
**caractérisé par** :
le transfert, en utilisant un service supplémentaire de signalisation d'utilisateur à utilisateur à commutation de circuits, avant l'établissement de la connexion à commutation de paquets de poste à poste, d'au moins une condition indiquant une ou plusieurs applications qui utiliseront la connexion à commutation de paquets de poste à poste après l'établissement de la connexion à commutation de paquets, la condition étant satisfaite si au moins l'une des une ou plusieurs applications indiquées est prise en charge par les deux postes ;
la vérification, avant l'établissement de la connexion à commutation de paquets de poste à poste, de la satisfaction ou non de la condition ; la vérification comprenant l'envoi, en utilisant le service supplémentaire de signalisation d'utilisateur à utilisateur à commutation de circuits, d'une réponse indiquant le résultat de la vérification du fait que la condition est satisfaite ;
la réception de la réponse ; et
l'établissement de la connexion à commutation de paquets de poste à poste si la condition est satisfaite.

2. Procédé selon la revendication 1, le procédé comprenant le transfert, en utilisant le service supplémentaire de signalisation d'utilisateur à utilisateur, en plus de la au moins une condition, d'un type de réseau de communication, et/ou d'informations d'adresse dans un réseau de communication, et/ou d'un mécanisme de sécurité, de valeurs concernant un mécanisme de sécurité, et/ou d'un protocole de couche de transport, et/ou d'informations concernant le rôle d'un poste dans la connexion à commutation de paquets de poste à poste.

3. Procédé selon la revendication 1 ou 2, dans lequel ledit transfert en utilisant le service supplémentaire de signalisation d'utilisateur à utilisateur comprend en outre le transfert d'informations concernant l'établissement de la connexion à commutation de paquets de poste à poste, lesdites informations indiquant au moins quand la connexion à commutation de paquets de poste à poste doit être établie ou lequel des postes doit établir la connexion à commutation de paquets de poste à poste.

4. Procédé selon l'une quelconque des revendications précédentes, dans lequel le service supplémentaire de signalisation d'utilisateur à utilisateur est un service supplémentaire de signalisation d'utilisateur à utilisateur 1 dans lequel des informations d'utilisateur à utilisateur peuvent être envoyées et reçues pendant l'établissement d'un appel.

5. Procédé selon l'une quelconque des revendications précédentes, dans lequel la connexion à commutation de paquets de poste à poste est établie après l'établissement d'un appel à commutation de circuits.

6. Procédé selon la revendication 4, dans lequel la connexion à commutation de paquets de poste à poste est établie pendant une phase d'établissement d'un appel à commutation de circuits et aucun appel à commutation de circuits n'est établi.

7. Terminal comprenant :
une interface de commutation de circuits pour des connexions à commutation de circuits ;
une interface de commutation de paquets pour des connexions à commutation de paquets ;
une ou plusieurs applications ; et
une interface de connexion pour recevoir une demande d'établissement d'une connexion de poste à poste depuis une application ;
**caractérisé en ce que** l'interface de connexion est configurée pour, en réponse à la demande, déclencher l'établissement d'une connexion à commutation de paquets de poste à poste en envoyant, avant l'établissement de la connexion à commutation de paquets de poste à poste, au moins une condition indiquant, parmi l'une ou plusieurs applications que le terminal comprend, une ou plusieurs applications qui utiliseront la connexion à commutation de paquets de poste à poste après l'établissement de la connexion à commutation de paquets, en utilisant un service supplémentaire de signalisation d'utilisateur à utilisateur à commutation de circuits, la condition étant satisfaite si l'autre poste prend en charge au moins l'une des une ou plusieurs applications indiquées ; et en recevant, avant l'établissement de la connexion à commutation de paquets de poste à poste, une réponse à la demande en utilisant le service supplémentaire de signalisation d'utilisateur à utilisateur à commutation de circuits, ladite réponse indiquant un résultat d'une vérification du fait que la condition est satisfaite.

8. Terminal selon la revendication 7, dans lequel l'interface de connexion est en outre configurée pour, en réponse à la réception dans la réponse d'une indication du fait que la condition est satisfaite, commander l'interface de commutation de circuits et l'interface de commutation de paquets de sorte que des informations concernant la connexion à commutation de paquets de poste à poste soient transférées entre l'interface de commutation de circuits et l'interface de commutation de paquets.

9. Terminal comprenant :
une interface de commutation de circuits pour les connexions à commutation de circuits ; et
une interface de commutation de paquets pour les connexions à commutation de paquets ;
**caractérisé en ce que** le terminal comprend en outre une interface de connexion pour recevoir, dans des informations d'utilisateur à utilisateur d'un service supplémentaire de signalisation d'utilisateur à utilisateur à commutation de circuits, une demande d'établissement d'une connexion à commutation de paquets de poste à poste, lesdites informations d'utilisateur à utilisateur comprenant au moins une condition indiquant une ou plusieurs applications qui utiliseront la connexion à commutation de paquets de poste à poste après l'établissement de la connexion à commutation de paquets ; pour vérifier, en réponse à la demande et avant l'établissement de la connexion à commutation de paquets de poste à poste, si, oui ou non, la condition est satisfaite, la condition étant satisfaite si le terminal prend en charge au moins l'une des une ou plusieurs applications indiquées ; et pour envoyer une réponse à la demande en utilisant le service supplémentaire de signalisation d'utilisateur à utilisateur à commutation de circuits, ladite réponse indiquant le résultat de la vérification.

10. Terminal selon la revendication 9, dans lequel l'interface de connexion est en outre configurée pour, en réponse au fait que la condition est satisfaite, commander l'interface de commutation de circuits et l'interface de commutation de paquets de sorte que des informations concernant la connexion à commutation de paquets de poste à poste soient transférées entre l'interface de commutation de circuits et l'interface de commutation de paquets.

11. Terminal selon la revendication 7, 8, 9 ou 10, dans lequel le terminal est agencé pour, en réponse au fait que la condition est satisfaite, établir la connexion à commutation de paquets de poste à poste sans établir une connexion à commutation de circuits.

12. Système de communication, comprenant au moins
un réseau à commutation de circuits ;
un réseau à commutation de paquets ; et
deux terminaux ou plus, tous deux fournissant un accès au réseau à commutation de circuits et au réseau à commutation de paquets, et prenant en charge une connexion à commutation de paquets de poste à poste et un service supplémentaire de signalisation d'utilisateur à utilisateur ;
**caractérisé en ce que**
les terminaux sont agencés pour échanger des informations concernant la connexion à commutation de paquets de poste à poste avant l'établissement de la connexion à commutation de paquets de poste à poste en utilisant un service supplémentaire de signalisation d'utilisateur à utilisateur à commutation de circuits, lesdites informations comprenant des informations concernant au moins une condition indiquant une ou plusieurs applications qui utiliseront la connexion à commutation de paquets de poste à poste après l'établissement de la connexion à commutation de paquets, la condition étant satisfaite si au moins l'une des une ou plusieurs applications indiquées est prise en charge par les deux terminaux, ledit échange d'informations, en utilisant le service supplémentaire de signalisation d'utilisateur à utilisateur à commutation de circuits, comprenant l'envoi de la condition depuis un premier terminal vers un deuxième terminal et l'envoi d'une réponse indiquant un résultat d'une vérification du fait que la condition est satisfaite depuis le deuxième terminal vers le premier terminal.

13. Système de communication selon la revendication 12, dans lequel
les terminaux sont agencés pour, en réponse au fait que la condition est satisfaite, établir la connexion à commutation de paquets de poste à poste sans établir un appel à commutation de circuits et pour échanger les informations pendant une phase d'établissement d'appel à commutation de circuits ; et
le réseau à commutation de circuits est agencé pour détecter que le service de signalisation d'utilisateur à utilisateur est pour une connexion à commutation de paquets de poste à poste, et pour, en réponse à la détection, ne pas attribuer un circuit de trafic pour l'appel mais pour utiliser un circuit dit à trafic nul pour l'établissement d'appel.

14. Système de communication selon la revendication 12 ou 13, dans lequel le réseau à commutation de circuits est agencé pour détecter que le service de signalisation d'utilisateur à utilisateur est pour une connexion à commutation de paquets de poste à poste, et, en réponse à la détection, pour bloquer l'échange d'informations.

15. Système de communication selon la revendication 12, 13 ou 14, dans lequel les terminaux sont agencés pour inclure dans lesdites informations des informations d'adresse ou des informations relatives à un mécanisme de sécurité à utiliser avec la connexion à commutation de paquets de poste à poste.
